(19) **Europäisches Patentamt European Patent Office Office européen des brevets**

(11) **EP 3 885 324 B1**

(12) **FASCICULE DE BREVET EUROPEEN**

(45) Date de publication et mention
de la délivrance du brevet:
**10.09.2025 Bulletin 2025/37**

(21) Numéro de dépôt: **21163737.6**

(22) Date de dépôt: **19.03.2021**

(51) Classification Internationale des Brevets (IPC):
***C02F 3/00*** *(2023.01)*

(52) Classification Coopérative des Brevets (CPC):
**C02F 3/16; C02F 3/006; C02F 3/205;**
C02F 2209/08; C02F 2209/22; Y02W 10/10

(54) **PROCÉDÉ D OPTIMISATION DE LA CONSOMMATION ÉNERGÉTIQUE D'UN AÉRATEUR DANS LE DOMAINE DU TRAITEMENT DES EAUX**

VERFAHREN ZUR OPTIMIERUNG DES ENERGIEVERBRAUCHS EINES LÜFTERS IM BEREICH DER WASSERAUFBEREITUNG

METHOD FOR OPTIMISING THE POWER CONSUMPTION OF AN AERATOR IN THE FIELD OF WATER TREATMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.03.2020 FR 2002803**

(43) Date de publication de la demande:
**29.09.2021 Bulletin 2021/39**

(73) Titulaires:
• **L'Air Liquide, société anonyme pour l'Étude et l'Exploitation des procédés Georges Claude 75007 Paris (FR)**
Etats contractants désignés:
**AL AT BE BG CH CY CZ DE DK EE ES FI GB GR HR HU IE IS IT LI LT LU LV MC MK MT NL NO PL PT RO RS SE SI SK SM TR**
• **Air Liquide France Industrie 75007 Paris (FR)**
Etats contractants désignés:
**FR**

(72) Inventeurs:
• **ALBAN, Bruno 92227 Bagneux (FR)**
• **CAMPO, Philippe 92227 Bagneux (FR)**
• **GOULAS, Frederic 92227 Bagneux (FR)**
• **BOUQUIN, Fabrice 92227 BAGNEUX (FR)**
• **BEAUDOUIN, Guillaume 92227 Bagneux (FR)**

(74) Mandataire: **Air Liquide L'Air Liquide S.A. Direction de la Propriété Intellectuelle 75, Quai d'Orsay 75321 Paris Cedex 07 (FR)**

(56) Documents cités:
WO-A1-2012/160300     WO-A2-2013/082059
US-A- 4 280 910      US-A1- 2015 265 979

**Description**

La présente invention concerne le domaine du traitement des eaux, et s'intéresse notamment aux appareils d'injection d'oxygène dans des bassins d'épuration. Cet oxygène est utilisé par la biomasse présente dans les bassins pour consommer la pollution présente dans l'eau.

Les documents suivants illustrent des exemples de tels appareils US 4 280 910 A, US 2015/265979 A1, WO2012160300A1,

EP-995 485, FR-2594112A1.

Mais plus généralement l'invention concerne la gestion du fonctionnement des appareils positionnés à la surface du bassin, équipés d'un système permettant de le maintenir au-dessus de l'eau (flottants), et comportant :

- un système d'injection d'un gaz riche en oxygène (typiquement entre 22% et 100%, préférentiellement entre 80 et 100% d'oxygène). Le système d'injection peut être une simple couronne percée d'orifices, ou encore une bougie poreuse, ces systèmes peuvent être accompagnés de systèmes complémentaires comme par exemple un mobile à pales, droites ou inclinées, un venturi avec une pompe peuvent aussi convenir comme système d'injection d'un tel gaz riche en oxygène ;
- un mobile de mélange et de dispersion du gaz tel qu'une hélice tripale ou une turbine Rushton etc...

Les caractéristiques essentielles de la présente invention se trouvent dans la revendication du procédé 1. Un autre mode de réalisation est décrit dans la revendication dépendante 2.

La présente invention s'intéresse tout particulièrement aux armoires de contrôle du fonctionnement de tels appareils.

Ces armoires permettent notamment le contrôle des moteurs de ces appareils, et de la gestion de l'injection du gaz riche en oxygène.

Des essais réalisés par la Demanderesse sur un appareil tel que celui décrit dans le document WO2012160300A1 ont permis de montrer que pour des débits faibles d'oxygène injectés dans un tel appareil, il est possible de réduire la puissance consommée tout en conservant une efficacité de brassage /mélange du milieu et un transfert du gaz dans le milieu équivalent à la puissance nominale utilisée, i.e la puissance consommée par le moteur quand le moteur est alimenté à la fréquence du réseau sans modification (le plus souvent 50 Hz).

Ce changement de puissance consommée par l'appareil a été obtenu en réduisant la taille du mobile principal, l'hélice de pompage.

Dans de tels appareils d'aération flottants, les performances (débits de gaz/oxygène réellement dissous et donc disponible pour le traitement et donc les bactéries), en dehors de la conception du système d'agitation, dépendent à la fois de la vitesse d'agitation et du débit de gaz.

Aussi, pour éviter d'observer des rendements médiocres, on a tendance en général à garder le débit d'agitation constant (au nominal donc) et ce, quel que soit le débit de gaz injecté (sur toute la gamme de performance en général, c'est-à-dire entre zéro et le débit maximum de gaz).

Or il s'avère que le besoin en oxygène peut être faible voir nul une bonne part du temps de la journée, jusqu'à 80% du temps sur une journée.

Le maintien des appareils à leur vitesse nominale implique alors une continuité inutile de consommation électrique.

La présente invention propose alors d'adapter la marche de l'appareil, en fonction du besoin en oxygène dans le milieu et/ou en fonction du débit de gaz à injecter, ceci on l'aura compris avec l'objectif d'optimiser la consommation d'énergie de l'équipement en fonction du besoin réel en oxygène pur.

Pour cela elle propose de mettre en œuvre dans l'armoire de contrôle un variateur de fréquence permettant le contrôle du moteur de l'appareil utilisé pour l'injection du gaz riche en oxygène. Le variateur agit sur la fréquence d'alimentation du moteur donc sur la vitesse de rotation de l'arbre sur lequel sont montés le ou les mobiles d'agitation / dispersion / injection.

A titre illustratif, on pourra mettre en œuvre les modes opératoires suivants :

- Nominal : l'appareil fonctionne (en termes d'agitation et d'injection) pour une gamme donnée au nominal, c'est-à-dire comme prévu à sa conception. En d'autres termes, l'appareil fonctionne à la fréquence du réseau, à cette fréquence il met en œuvre une vitesse de rotation nominale qui entraine une capacité d'injection et de transfert de gaz nominale.

- Maximum : l'appareil peut être accéléré en augmentant la fréquence d'alimentation du moteur (dans les limites acceptables des tolérances de conception mécanique, en particulier pour le moteur), ce qui a pour effet d'augmenter à la fois l'agitation et (par conséquent) la dispersion du gaz que l'on injecte et donc de pousser au-delà de la valeur de conception l'injection du gaz. Dans le cas d'appareils pour lesquels un débit de gaz élevé menacerait d'engorger l'équipement, équipement équipé par exemple d'une turbine auto-aspirante, cette alimentation à une fréquence admissible mais supérieure à la valeur de conception permet de repousser la limite du débit d'engorgement. En effet, suivant la conception du moteur, pour réduire la consommation électrique dans le cas où le besoin en oxygène est faible (typiquement < 50% du débit maximum d'injection) il est possible en général de réduire la fréquence de 10 à 20 Hz. Dans le cas où l'on souhaite augmenter la capacité d'injection (débit d'injection supérieur au débit maximum à la fréquence de 50 Hz), il est possible d'augmenter la fréquence d'alimentation du moteur d'environ 10 Hz, souvent entre 2 et 5 Hz.

- Minimum/marche réduite : la vitesse de rotation des éléments mobiles de l'appareil (turbine auto-aspirante, pales de cisaillement, hélice de mélange... ) est alors ralentie (fréquence inférieure au nominal). Dans le même temps, le débit d'oxygène est réduit de façon à garder, pour cette vitesse de rotation réduite, un rendement de transfert du gaz équivalent au fonctionnement nominal de l'équipement. La vitesse nominale n'est en effet pas requise, pour ce débit de gaz réduit, afin de maintenir une bonne dispersion et donc un bon rendement d'absorption du gaz.

En ayant donc la possibilité de faire varier la vitesse de rotation de l'équipement/vitesse d'agitation, à l'aide d'un variateur de fréquence (dans une certaine gamme acceptable par l'appareil, en particulier par le moteur), la consommation totale énergétique sera réduite sur la journée (80% du temps à marche réduite par exemple) et ce sans nuire à l'efficacité de l'équipement.

L'homme du métier de l'aération des milieux liquides est familier de cette notion de régime « nominal ».

En effet, de tels aérateurs sont des assemblages de pièces standardisées, réalisant les deux fonctions nécessaires à une aération maximisée i.e le brassage de la liqueur et la dispersion du gaz.

Les pièces sont proposées par les fabricants de tels aérateurs qui les ont conçues et optimisées pour cela :

- un moteur : sa conception impose une gamme de vitesse, nombre de pôles, caractéristiques de son alimentation électrique (dont la fréquence nominale imposée par les fournisseurs d'électricité nationaux : 50 Hz en France). Les moteurs les plus courants tournent à environ 1200 tr/min pour 50 Hz d'alimentation. Le nombre de pôles (bobinage) permet au courant alternatif (à sa fréquence) de faire tourner l'arbre contenu au centre des pôles à la vitesse nominale donc.
- au moins un système d'agitation-mélange comme une hélice, une turbine... qui va transformer les mouvement de l'arbre/puissance transmise par l'arbre en mise en mouvement du fluide/liqueur mixte et assurer la dispersion du gaz. Ces systèmes sont conçus et fabriqués par des fournisseurs qui donnent ici encore la bonne gamme de fonctionnement ou d'utilisation, gamme de vitesse de rotation autour d'un point nominal.

Une vitesse de 200-500 tr/min, correspond à une gamme souvent préconisée par les fournisseurs pour la mise en mouvement des fluides tels que l'eau (donc pas trop visqueux, plutôt du type newtonien). En revanche, pour des fluides très visqueux (pâteux, non newtoniens...), on utilise traditionnellement des mobiles différents (vis d'archimède par exemple, qui présente le maximum de surface au fluide) et qui tournent très lentement (< 100 tr/min).

En d'autres termes, l'homme du métier des aérateurs sait que pour chaque type de matériel, le constructeur donne une gamme de vitesse de rotation recommandée « par construction ».

C'est donc le mérite de la présente invention d'avoir proposé de faire varier le fonctionnement de l'aérateur sans modification importante et sans dommage à aucune partie, en constatant qu'il n'est nul besoin de maintenir en permanence point de fonctionnement fixe, et qu'il y a un vrai gain à le faire bouger un peu, très peu autour de ce point :

- un peu plus pour aérer plus lorsque le bassin en a besoin (pic de charge), sans nécessité d'investir plus.
- un peu moins dans une majeure partie de la journée d'un bassin puisque la pollution n'arrive pas en continu, en minimisant ainsi la puissance consommée.....

Néanmoins, et afin de clarifier les conditions d'opération recommandées selon la présente invention, on indique ici les gammes préférées pour cette vitesse de rotation :

- entre 50 et 1000 tr/min : On peut en effet considérer qu'au dessus de cette gamme, on vise des agitateurs très particuliers qui ne sont que peu ou pas utilisés dans le domaine de la présente invention et de même en dessous de cette gamme on va trouver des agitateurs qui tournent lentement pour agiter des fluides pâteux.

- et plus préférentiellement entre 50 à 500 tr/min : car en effet on peut considérer qu' au dessus de 500 tr/min, on trouve des petits mobiles ou alors des formes particulières qui s'appliquent peu ou moins bien au domaine visé par la présente invention.

- et encore plus préférentiellement entre 150 et 350 tr/min.

On décrit ci-dessous un exemple de marche sur un appareil flottant, poussant le gaz injecté par le fond grâce à des agitateurs/hélices montées sur un arbre d'agitation, appareil tel que celui décrit dans le document WO2012/160300A1.

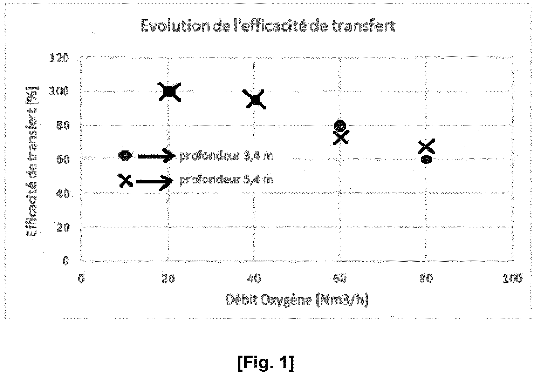

Les courbes fournies en figure 1 annexée (une pour un système à une profondeur de 3,4m, l'autre à 5,4m) permettent de constater que l'efficacité ou rendement de transfert augmente, pour une vitesse d'agitation donnée, lorsque le débit de gaz injecté (oxygène pur ici) est diminué.

On profite donc de ce gain pour diminuer la vitesse d'agitation et maintenir un rendement de transfert élevé (>80% en général).

L'efficacité de transfert évoquée ici est déterminée suivant la méthode standard décrite dans la littérature qui consiste, à partir d'une valeur initiale en oxygène dissous proche de 0, on injecte à débit fixe le gaz ($O_2$) et on suit en fonction du temps l'évolution de la concentration en oxygène dans l'eau. A partir de cette courbe (asymptotique, valeur finale correspondante à la saturation), on en déduit le coefficient de transfert (dit kL.a) ou la quantité réellement dissoute (donc transférée). Finalement, l'efficacité correspond au rapport entre la quantité dissoute et la quantité injectée.

On décrit dans ce qui suit un exemple de mise en oeuvre dans un bassin à boue activée utilisé dans une station de traitement des eaux.

Ce bassin est aéré et agité par des appareils d'injection d'oxygène flottants tels que ceux décrits dans le document WO2012160300A1.

En marche normale (« nominal »), on consomme P°=16 kW pour une vitesse d'agitation de N°=283 tr/min et un diamètre d'agitateur D=680 mm (le diamètre de l'hélice en bout d'arbre dans le document mentionné ci-dessus, qui crée le mouvement global, donc à la fois l'agitation/mélange et donc la dispersion du gaz dans le bassin).

Le débit de gaz (oxygène) injecté pour cette marche au nominal est de l'ordre de 56 $Nm^3$/h avec un taux de transfert de l'ordre de 80% en conditions réelles.

Aussi, en marche continue (débit de gaz et vitesse d'agitation), on consommera :

$$P \text{ totale} \sim 1{,}38 \ 10^6 \text{ kJ/jour} = 16000 \times 24 \times 3600$$

On peut noter qu'en régime turbulent, le nombre a-dimensionnel dit « de puissance » Np est constant (quels que soient les paramètres opératoires N et D), s'exprimant selon la formule suivante :

$$Np = P / (\rho.N^3.D^5) \text{ avec } \rho \text{ la masse volumique du milieu agité (eau, pris à 1000 kg/m}^3 \text{ dans l'exemple présent).}$$

(N : vitesse d'agitation en tr/s, et D diamètre du mobile principal en m)

Dans le cas présenté, $Np \sim 1{,}05 = 16000/[1000 \times (283/60)^3 \times 0{,}68^5]$

Dans le cadre de la présente invention, en considérant que dans 80% du temps, c'est-à-dire hors de la période où un pic de pollution arrive sur la station de traitement des eaux usées, le besoin en oxygène est bien plus faible, ce besoin bien plus faible ne nécessite plus qu'une injection par appareil comprise entre 0 et 30 $Nm^3$/h en gardant un rendement de transfert de l'ordre de 80%. L'appareil fonctionnera donc à vitesse réduite pendant 80% de la journée (soit 19,2 h sur 24 h) lorsque le besoin en oxygène (oxygène pur ou gaz riche en oxygène) est compris entre 0 et ici 30 $Nm^3$/h. Ce fonctionnement à une vitesse réduite permet de garder une capacité de brassage/mélange suffisante pour garder les boues (flocs biologiques) en suspension dans le bassin et une capacité de transfert du gaz équivalente (à + ou - 5%) à celle déterminée pour le fonctionnement nominal de l'équipement.

Dans notre exemple, la vitesse est réduite de 8% seulement, ce qui conduit à N*=263 tr/min.

Et ainsi la nouvelle puissance consommée P*-12,8 kW = $1{,}05 \times 1000 \times (263/60)^3 \times 0{,}68^5$

La nouvelle énergie totale consommée dans la journée sera :

$$P \text{ tot*} = 1{,}16 \ 10^6 \text{ kJ/jour} = (16000 \times 4{,}8 + 12800 \times 19{,}2) \times 3600$$

Elle correspond en effet à la contribution de chaque marche pendant la journée.

Le gain énergétique réalisé grâce à l'invention par l'ajout d'un variateur de vitesse est donc de 16% environ et ce, simplement en faisant varier de 8% la vitesse d'agitation et bien évidemment en gardant une efficacité de brassage /mélange suffisante pour maintenir les boues en suspension et un transfert de gaz équivalents aux conditions nominales.

La présente invention concerne alors une méthode de gestion du fonctionnement d'un appareil d'injection d'oxygène dans un bassin d'épuration, oxygène notamment utilisé par la biomasse présente dans le bassin pour consommer la pollution présente dans un effluent à traiter contenu dans ce bassin, appareil se caractérisant par les composants et fonctionnalité suivantes :

- l'appareil est positionné à la surface du bassin, et équipé d'un système permettant de le maintenir flottant au-dessus du liquide ;

- il comporte un dispositif d'entrainement, destiné à être disposé au-dessus du liquide, pourvu d'un arbre de sortie vertical ou incliné, arbre équipé à son extrémité d'au moins un mobile de mélange et de dispersion du gaz injecté tel qu'une hélice tripales ;

- il comporte un système d'injection d'un gaz comportant de l'oxygène (typiquement entre 20% et 100%, préférentiellement entre 80 et 100% d'oxygène) ;

méthode se caractérisant en ce que l'on fait varier, à l'aide d'un variateur de fréquence, la vitesse de rotation de l'arbre, la variation de vitesse appliquée étant comprise entre plus 15 % et moins 15% de la vitesse nominale de l'équipement, et plus préférentiellement entre plus 10 % et moins 10% de la vitesse nominale de l'équipement, i.e. dans les conditions où le moteur est alimenté à la fréquence du réseau sans modification, cela afin d'optimiser la consommation électrique en fonction du besoin d'injection du gaz comportant de l'oxygène et de la capacité de brassage nécessaire au bassin d'épuration où est installé l'équipement

## Revendications

1. Méthode de gestion du fonctionnement d'un appareil d'injection d'oxygène dans un bassin d'épuration, oxygène notamment utilisé par la biomasse présente dans le bassin pour consommer la pollution présente dans un effluent à traiter contenu dans ce bassin, appareil **se caractérisant par** les composants et fonctionnalités suivantes :

   - l'appareil est positionné à la surface du bassin, et équipé d'un système permettant de le maintenir flottant au dessus du liquide ;
   - il comporte un dispositif d'entrainement, destiné à être disposé au dessus du liquide, pourvu d'un arbre de sortie vertical ou incliné, arbre équipé à son extrémité d' au moins un mobile de mélange et de dispersion du gaz injecté tel qu'une hélice tripales ;
   - il comporte un système d'injection d'un gaz comportant de l'oxygène ;

   méthode **se caractérisant en ce que** l'on fait varier, à l'aide d'un variateur de fréquence, la vitesse de rotation de l'arbre, la variation de vitesse appliquée étant comprise entre plus 15 % et moins 15% de la vitesse nominale de l'équipement, et plus préférentiellement entre plus 10 % et moins 10% de la vitesse nominale de l'équipement, i.e dans les conditions où le moteur est alimenté à la fréquence du réseau sans modification, cela afin d'optimiser la consommation électrique en fonction du besoin d'injection du gaz comportant de l'oxygène et de la capacité de brassage nécessaire au bassin d'épuration où est installé l'équipement .

2. Méthode selon la revendication 1, **se caractérisant en ce que** la vitesse de rotation nominale est située dans la gamme entre 50 et 1000 tr/min, plus préférentiellement entre 50 à 500 tr/min, et plus préférentiellement entre 150 et 350 tr/min.

## Patentansprüche

1. Verfahren zur Verwaltung des Betriebs eines Geräts zum Einleiten von Sauerstoff in ein Klärbecken, wobei der Sauerstoff insbesondere von der in dem Becken vorhandenen Biomasse verwendet wird, um die in einem zu behandelnden Abwasser, das in diesem Becken enthalten ist, vorhandene Verunreinigung zu verzehren, wobei das Gerät durch die folgenden Komponenten und Funktionalitäten gekennzeichnet ist:

   - das Gerät ist an der Oberfläche des Beckens positioniert und mit einem System ausgestattet, dass es ermöglicht, es über der Flüssigkeit schwimmend zu halten;
   - es umfasst eine Antriebsvorrichtung, die dazu bestimmt ist, über der Flüssigkeit angeordnet zu sein, und mit einer vertikalen oder geneigten Abtriebswelle versehen ist, wobei die Welle an ihrem Ende mit mindestens einem Drehteil zum Mischen und Dispergieren des eingeleiteten Gases wie einem dreiflügeligen Propeller ausgestattet ist;

- es umfasst ein System zum Einleiten eines Sauerstoff umfassenden Gases;

wobei das Verfahren **dadurch gekennzeichnet ist, dass** mithilfe eines Frequenzreglers die Drehgeschwindigkeit der Welle geändert wird, wobei die angewandte Geschwindigkeitsänderung zwischen plus 15 % und minus 15 % der Nenngeschwindigkeit der Einrichtung liegt und noch bevorzugter zwischen plus 10 % und minus 10 % der Nenngeschwindigkeit der Einrichtung, d. h. unter den Bedingungen, unter denen der Motor mit der Frequenz des Netzes ohne Veränderung versorgt wird, und dies, um den Stromverbrauch in Abhängigkeit von dem Einleitungsbedarf des Sauerstoff umfassenden Gases und von der für das Klärbecken, in dem die Einrichtung installiert ist, erforderlichen Durchmischungskapazität zu optimieren.

2. Verfahren nach Anspruch 1, **dadurch gekennzeichnet, dass** die Nenndrehgeschwindigkeit in dem Bereich zwischen 50 und 1000 U/min, noch bevorzugter zwischen 50 und 500 U/min und noch bevorzugter zwischen 150 und 350 U/min liegt.

**Claims**

1. Method for managing the operation of an apparatus for injecting oxygen into a purification basin, the oxygen notably being used by the biomass present in the basin to consume the pollution present in an effluent feedstock contained in this basin, the apparatus being **characterized by** the following components and functionalities:

   - the apparatus is positioned at the surface of the basin and equipped with a system enabling it to be kept floating above the liquid;
   - it comprises a drive device, intended to be positioned above the liquid, and provided with a vertical or inclined output shaft, the shaft being equipped at its end with at least one moving part for mixing and for dispersing the injected gas, such as a three-bladed impeller;
   - it comprises a system for injecting a gas containing oxygen;

   the method being **characterized in that** a frequency variator is used to vary the rotational speed of the shaft, the applied variation in speed being comprised between plus 15% and minus 15% of the nominal speed of the equipment, and more preferably between plus 10% and minus 10% of the nominal speed of the equipment, i.e. the speed under conditions in which the motor is powered at the mains frequency without modification, this being so as to optimize the electrical power consumption according to the need for injection of the oxygen-containing gas and the necessary agitation capacity for the purification basin in which the equipment is installed.

2. Method according to Claim 1, **characterized in that** the nominal rotational speed is situated in the range between 50 and 1000 rpm, more preferably between 50 and 500 rpm, and more preferably between 150 and 350 rpm.

[Fig. 1]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4280910 A
- US 2015265979 A1
- WO 2012160300 A1
- EP 995485 A
- FR 2594112 A1